(19) Europäisches Patentamt
European Patent Office
Office européen des brevets

(11) Publication number: **0 206 189**
**B1**

(12) # EUROPEAN PATENT SPECIFICATION

(45) Date of publication of patent specification: **24.10.90**

(51) Int. Cl.$^5$: **C 03 C 25/02,** C 03 C 13/00, C 08 J 5/08

(21) Application number: **86108169.3**

(22) Date of filing: **14.06.86**

(54) **Chemically treated glass fibers for reinforcing polymeric materials and processes.**

(30) Priority: **25.06.85 US 748388**
**25.06.85 US 748389**

(43) Date of publication of application:
**30.12.86 Bulletin 86/52**

(45) Publication of the grant of the patent:
**24.10.90 Bulletin 90/43**

(84) Designated Contracting States:
**BE CH DE FR GB IT LI NL**

(56) References cited:
**EP-A- 186 077**
**US-A-3 923 708**
**US-A-4 110 094**
**US-A-4 166 747**
**US-A-4 518 653**

(73) Proprietor: **PPG INDUSTRIES, INC.**
**One PPG Place**
**Pittsburgh Pennsylvania 15272 (US)**

(72) Inventor: **Sanzero, George Valentine**
**9310 Hemingford Court**
**Charlotte North Carolina 28211 (US)**
Inventor: **Hudson, Howard John**
**202 Dora Street**
**Whitaker Pennsylvania 15120 (US)**
Inventor: **Melle, David Thomas**
**1103 Mt. Royal Blvd. Apt. 301**
**Pittsburgh, Pa. 15223 (US)**
Inventor: **Das, Balbhadra**
**8005 Lingay Drive**
**Allison Park, Pa. 15101 (US)**

(74) Representative: **Sternagel, Hans-Günther, Dr. et al**
**Patentanwälte Dr. Michael Hann Dr. H.-G. Sternagel Sander Aue 30**
**D-5060 Bergisch Gladbach 2 (DE)**

**EP 0 206 189 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

The present invention is directed to glass fibers treated with an aqueous chemical treating composition, where the fibers are ideal for use in reinforcing polymeric matrices for producing panels and particularly, translucent panels.

The reinforced plastic industry has been using glass fibers in various forms for reinforcing polymeric matrices to produce myriad products. For instance, glass fibers have been used in the forms of continuous and chopped filaments and strands and mats and rovings and woven and nonwoven fabrics to reinforce polymers. Both thermoplastic and thermosetting polymeric matrices have been reinforced with the various forms of glass fibers in producing such products as sheet molding compound, bulk molding compound, injection molding products, spray up molding products and the like molding products.

In producing glass fibers for the polymeric reinforcement market, the glass fibers are attenuated from molten streams of fiberizable glass material from a bushing or a like device connected to a furnace containing molten fiberizable glass material. The glass fibers are attenuated by a winder, which collects gathered filaments into a package, or by rollers, which pull the fibers before they are collected and chopped. In the process of producing glass fibers, a chemical treating composition is applied to them shortly after they are attenuated as the molten streams of glass. The chemical treating composition is usually an aqueous composition, traditionally containing film forming materials, coupling agents and lubricants. The chemical treating composition is needed to retard inter filament abrasion of the glass fibers, when they are gathered into a bundle of glass fibers or strands and to make the glass fibers compatible with polymeric matrices that they are to reinforce. Typically, the chemically treated glass fibers are dried either in the package form or in the chopped strand form before they are used for reinforcing polymeric matrices.

Glass fiber reinforced polymeric matrices like clear or translucent reinforced plastic panels have applications in solar collectors, sky lights, artificial light fixture covers, patio covers, highway signs and markings, green house glazings and the like. In translucent panels with glass fiber reinforcement, the glass fibers must have particular characteristics over and above the usual glass fiber characteristics required in other reinforced polymeric products.

For instance, the glass fibers must not reduce the clarity or weatherability of the panels, and the glass fibers must have adequate processability in the production of the panels. Adequate processability includes good strand choppability and a reduction of any tendency for strand to strand adhesion in producing the panels and ready dispersibility of the strands in the polymeric matrix in the allotted processing time. A stubborn, perplexing problem confronting the art in this area is that with particular types of glass fibers and with particular components of the aqueous chemical treating composition, the requisite characteristics are difficult to achieve. In some instances, the difficulty actually amounts to several of the characteristics being mutually exclusive.

US—A—4518653 describes chemically treated glass fibers for reinforcing polymeric materials having thereon a dried residue of an aqueous treating composition comprising at least an epoxy containing polymer or copolymer, a non-tacky film forming polymer which is either a polyester polymer prepared with bisphenol A as one of the monomers or an esterified epoxy polymer and polyvinyl pyrrolidone, gamma methacryloxy alkyltrialkoxy silane as a lubricant in an effective lubricating amount and a silane coupling agent and water in an amount to give a total solid content for the treating composition of 1 to 30 weight percent. The refractive index of the glass fibers is in the range of 1.549 to 1.557. The treated glass fibers are chopped and applied to a polymeric matrix to produce a fiber reinforced polymeric material having a good clarity and weather ability.

US—A—3,923,708 refers to an aqueous sizing composition for glass fibers comprising a film forming material, a coupling agent, a lubricant and an antistatic agent which are alkyl amines, quaternary ammonium salts, polyoxyethylene alkyl amines and ampholytic surface active agents of the betaine type or a triethanolamine sulfate or sulfonate. The film forming polymer is an emulsifiable unsaturated polyester of the bisphenol type. The lubricants may be a fatty acid amide or other well known lubricants. The coupling agent may be a silane such as gamma methacryloxypropyltrimethoxy silane.

EP—A 186 077 which is a document to be considered under Article 54(3) EPC refers to low boron glass fibers with low index of refraction which can be sized by known sizing compositions such as a composition known from US—A—4,110,094. The sizing composition used in the example has four principal nonaqueous components. One component is one or more aqueous soluble, dispersible or emulsifiable thermoplastic bisphenol A polyester film forming polymer alone or in blend with an epoxy-containing polymer. Another is one or more acryloxy- or methacryloxy-containing organo silane coupling agent. An additional component is one or more cationic lubricants such polyalkylene amines partially amidated with fatty acids and a further component is one or more organic nitrogenated cationic quaternary ammonium salt antistatic agents in an amount of 0.05 to 0.4 weight percent of the aqueous treating composition. The composition is essentially free of inorganic antistatic agents and hydrogenated vegetable oil.

It is the object of the present invention to provide other chemically treated glass fibers that are processable into glass fiber reinforced plastics and especially, clear or translucent glass fiber reinforced plastic panels and which avoids electrostatic problems.

This object is attained by glass fiber strands having a plurality of glass fibers, where the glass fibers

have at least a portion of their surfaces covered with the dried residue of an aqueous treating composition comprising an aqueous emulsion of a water soluble, dispersible or emulsifiable bisphenol A polyester film forming polymer, one or more organo functional acryloxy-containing or methacryloxy-containing coupling agents, one or more cationic fiber lubricants in an effective lubricating amount, and water in an amount to give a total solids of the aqueous treating composition in the range of from 1—30 weight percent, characterised in that the bisphenol A polyester thermoplastic. film forming polymer having polar functionality and having an eqivalent viscosity of less than 10,000 mPa.s for around a 50 weight percent solids polymeric emulsion, and having no more than an average of 1.5 aliphatic double bonds/mole of polymer, and having a ratio of aliphatic unsaturation to aromatic unsaturation of not greater than 0.1 as measured by IR absorptivity on film dried at room temperature when the polymer has an average of 1.5 aliphatic double bonds per mole, and the aqueous chemical treating composition has less than around 1 weight percent of chain extension inducing or condensation inducing reactants and containing self-crosslinkable materials as strand hardener selected from aldehyde condensate polymers such as melamine formaldehyde, hexakis/methylol-containing condensates, monomers, dimers, trimers and higher oligomers, where for the phenol or resorcinol, compounds include cresol and mixtures of its isomers, xylenol or mixtures of its isomers, a mixture of homologs of phenol and dihydric phenols such as resorcinol, cresorcinol, and meta-xylorcinol and wherein the aqueous treating composition is essentially free of components having aliphatic unsaturation outside the range of not more than 1.5 aliphatic double bonds/mole of polymer and a ratio of aliphatic to aromatic unsaturation of not greater than 0.1, and the aqueous treating composition comprises a cationic organic quaternary ammonium salt having alkoxy moieties antistatic agent in an amount of 0.05 —0.4 weight percent of the aqueous treating composition and the treating composition is essentially free of inorganic antistatic agents and of hydrogenated hydrocarbon oils.

The subclaims refer to preferred embodiments of the invention.

## SUMMARY OF THE INVENTION

Glass fibers of the present invention having the dried residue of an aqueous chemical treating composition present on a substantial portion of the surface of the fibers have good processability for reinforcing polymeric matrices, and result in cured matrices having good weatherability.

The aqueous treating composition has four principal nonaqueous components. One nonaqueous component is one or more aqueous soluble, dispersible or emulsifiable bisphenol A type polyester film forming polymer alone or in a blend with an epoxy-containing film forming polymer compatible with and soluble in the matrix polymer. Another nonaqueous component is one or more acryloxy- or methacryloxy-containing organo coupling agents. An additional nonaqueous component is one or more cationic filament lubricants, for instance, polyalkylene imines partially amidated with fatty acids. Another nonaqueous component is one or more antistatic agents that are cationic organic quaternary ammonium salts having one or more alkoxy moieties in an effective antistatic amount. The composition is essentially free of inorganic antistatic agents and hydrogenated hydrocarbon oil. The amount of water in the composition allows the glass fibers to be treated with the aqueous treating composition. In addition, the aqueous composition has a melamine formaldehyde resin as a strand hardening agent. The predominant amount of the nonaqueous components is comprised of the thermoplastic film forming polymer, while the organo coupling agent and lubricant are present in effective amounts for coupling and lubricating, respectively. The effective antistatic amount of antistat is in the range of 0.05 to 0.4 weight percent of the aqueous treating composition.

The aqueous treating composition is applied to glass fibers, produced from any fiberizable glass composition, and the fibers are produced into chopped strands or multilayered packages of continuous strands. In a preferred aspect of the invention, the fiberizable glass composition may be composed of materials to result in glass fibers having a low refractive index in the range of 1.5495—1.5740. These sized glass fibers can reinforce proper polymeric matrices to produce translucent, and if desired, clear glass fiber reinforced polymeric panels. The translucent glass fiber reinforced polymeric panels have glass fibers that are not plainly apparent and do not detract from weatherability.

## BRIEF DESCRIPTION OF THE DRAWINGS

Fig. 1 is an nuclear magnetic resonance curve for the antistatic agent that is a cationic organic quaternary ammonium salt having at least one alkoxy moiety that is commercially available under the trade designation Neoxil® AO—5620.

Fig. 2 is a nuclear magnetic resonance curve for an aqueous emulsion of a bisphenolic polyester resin which is commercially available under the trade designation Neoxil® 954 material from Savid.

Fig. 3 is an infrared spectrophotometric curve for the antistatic agent that is a cationic organic quaternary ammonium salt having at least one alkoxy moiety that is commercially available under the trade designation Neoxil® AO—5620.

## DETAILED DESCRIPTION OF THE INVENTION AND PREFERRED EMBODIMENT

In the production of glass fiber reinforced polymeric materials, the glass fibers must have particular characteristics. In addition, when the reinforced polymeric material is produced into clear or translucent

polymeric panels, such as those used in skylights, patio covers, highway signs and markings, artificial light fixture covers and decorative facades, solar collectors, green house glazings, and the like, the glass fibers must have additional characteristics. The characteristics that are necessary for the glass fibers to be used in such a matrix polymer for producing such products include good choppability for dispersibility in the matrix polymer, good solubility in the matrix polymer for fast wet-out, low fiber prominence and good clarity in the cured polymer panel and good weatherability in the cured polymer panel. For the choppability of the glass fibers in the form of bundles of glass fibers or strands of gathered glass fibers, the resulting bundles and/or strands should not have strand to strand adhesion, commonly referred to in the industry as matchsticking. Such a characteristic of the glass fiber bundles or strands would result in poor wet-out of the glass fibers in the polymeric matrix. The glass fibers of the present invention are most suitable for use in forming clear and translucent panels of glass fiber reinforced polymeric materials such as unsaturated polyesters and epoxies.

In addition, the chemically treated glass fibers of the present invention can also be used in any polymeric matrix including filled and pigmented systems, where there is a desirability to have the fast wet-out of the glass fibers in the polymeric matrix. "Wet-out" means that the matrix polymer encapsulates the glass fibers and very little, if any, bare glass is visible throughout the cured fiber reinforced polymeric material. Wet-out during production of the glass fiber reinforced polymeric material is a measure of the apparent intimacy of contact between the polymeric and the glass fibers. If the glass fibers are not intimately wet-out following the application of the glass fibers to the polymeric matrix, this may affect adversely the processability, curing characteristics and surface properties of the final cured fiber reinforced polymeric material. In processing of panels of fiber reinforced polymeric material, the wet-out of the chopped glass fiber strand or bundles of fibers must occur within a short time before the polymeric matrix containing the chopped glass fibers is cured in a processing line. Therefore, the speed of the wet-out of the chopped glass fiber strands or bundles of fibers is an important criteria in producing such products as clear or translucent panels. Any retardation of the speed of wet-out of the chopped glass fiber strands would not be advantageous in the processing of panels of fiber reinforced polymeric materials. Also the chemically treated fibers of the present invention are best suited in producing weatherable, fiber reinforced polymeric panels.

A commercially available chemically treated glass fiber strand product made in accordance with US—A—4,110,094 was used to produce panels of glass fiber reinforced acrylic polyesters. It was discovered that the panel product had good weatherability, but the panel product was deficient in clarity and wet-out of the glass fiber strand and in matchsticking between the glass fiber strands. The chemically treated glass fiber strands had a dried residue of an aqueous treating composition having a 4,4'-isopropylidene diphenol bisphenol-A-type epoxy resin, a reaction product of a partial ester of maleic anhydride and an epoxy resin containing one or more unesterified carboxyl groups and containing more than one epoxy, a propylene glycol-ethylene oxide surfactant, (F—108 surfactant), hydrogenated corn oil (Pureco® oil), polyethylene glycol emulsifier (Triton® X—100), octylphenoxypolyethylene oxyethanol, polyvinyl pyrrolidone film former, methacryloxypropyltrimethoxy silane, acetic acid, fatty acid amine salt as a glass fiber lubricant (Emery 6717) and sufficient water to give a solids content in the range of about 6.5 ± 0.2 percent.

It was surmised that the treating composition for the glass fibers affected the ultimate properties of the fiber reinforced polymeric panel by the interaction of the chemical treatment on the glass fibers and the chemistry of the polymeric matrix. After numerous experiments, it was discovered that many of the ingredients provided both beneficial and detrimental effects with the latter effects sometimes overshadowing the former effects. For instance, the methacryloxypropyltrimethoxy silane or its hydrolysis products provide good weatherability for the reinforced polymer panels. Unfortunately, this silane is a major contributor to the generation of static in the chemically treated glass fibers. These two effects are so pronounced that weatherability cannot be achieved without the concomitant static generation with the fibers and strands. It was further discovered that several other components in sizing formulations reduced wettability of the strand, increased tackiness of the strand, reduced strand choppability and reduced clarity of the fiber reinforced panels.

It has been discovered that the factors and functions associated with producing chemically treated glass fibers, which have good wettability in the production of glass fiber reinforced polymeric matrixes, and which have good choppability and a reduced tendency for matchsticking, and associated with producing panels of glass fiber reinforced polymeric matrices having not only good weatherability but also good clarity can be interrelated so as not to be detrimental to each other. Also, the absence of particular materials from the dried residue of the glass fibers of the present invention are necessary to achieve the desired characteristics.

The film forming polymer present in the aqueous treating composition, which results in the treated glass fibers of the present invention, is both compatible with and soluble in the polymeric matrix. The polymeric matrix is that polymer which the glass fibers reinforce. The compatibility and solubility are such that the treated glass fibers wet-out in the matrix polymer in less than around 10 minutes, when the fibers and matrix polymer are intimately contacted. The aqueous soluble, dispersible or emulsifiable film forming polymer of the aqueous chemical treating composition is a polymer that forms a clear, translucent film with limited tack upon evaporation of water and any solvents or upon curing. The limited-tack film forming

polymer contributes its characteristics of limited tacticity to the dried residue of the aqueous treating composition. The film of the dried residue of the aqueous treating composition has a less tacky characteristic than a film of any epoxy polymer like Epon 828 resin. Also, the film is tough and gives a nearly continuous film on the surface of the glass fibers. In achieving such a film characteristic, there is no penalty of reducing, to any great extent, the wettability of the treated glass fibers, or in detrimentally affecting the clarity of polymeric panels reinforced with the treating fibers.

The nature of the film formed by the aqueous chemical treating composition with the limited tack type film forming polymer is that glass fibers, when chopped into 6.35 mm (quarter inch) lengths, have an apparent bulk density of greater than 17.8 kg/m$^3$ (30 pounds/ft$^3$). The apparent bulk density test is conducted by any method known to those skilled in the art. A nonexclusive example of the apparent bulk density test includes pouring measured weight of chopped strands into a 250 milliliter graduated cylinder. The cylinder is mounted into a bulk density tester like that available as J—M Bulk Density Tester from Richmond's Machine Company, East Main Street, Montpelier, Ohio 43543. The counter of the tester is set for 50 taps and the machine is started. After the machine stops, the volume of glass fibers in the graduated cylinder is read. The apparent bulk density is then calculated by dividing the weight of the chopped strand by the volume reading after tapping. This figure is multiplied by 62.43 to obtain the apparent bulk density in pounds per cubic foot.

The aqueous emulsion of the thermoplastic film forming polymer has an average amount of aliphatic unsaturation of less than around 1.5 aliphatic double bonds/mole of polymer and has a ratio of aliphatic unsaturation to aromatic unsaturation not to exceed 0.1. The ratio is determined by IR absorptivity on film dried at room temperature either by air or under vacuum. Also the value of the ratio of 0.1 is when the polymer has an average amount of 1.5 aliphatic double bonds per mole. In addition, the aqueous chemical treating composition has a low amount of any condensation crosslinking inducing and chain extension inducing reactants.

A nonexclusive example of a suitable film forming polymer with limited tack is an aqueous soluble, dispersible or emulsifiable bisphenolic polyester polymer like one formed from bisphenol A, butene diol or maleic anhydride or maleic acid and adipic acid with internal and/or external emulsification through the use of a polyalkylene polyol such as polyethylene glycol. Preferably, the polyester is internally emulsified through ethoxylation for a polymer with a weight average molecular weight in the range of 30,000 to 45,000 and a polydispersity index Mw/Mn 5 to 9. Preferably, this type of bisphenol polyester limited tack polymer is the sole film forming polymer in the aqueous chemical treating composition. An example of such a polymer is the single aqueous emulsion of alkoxylated bisphenol polyester resin commercially available under the trade designation Neoxil® 954 and manufactured by Savid, Como, Italy. The properties of the Neoxil® 954 resin are as follows: appearance – milky liquid, solids content – 46 ± 3%, pH – 3—5, viscosity at 23°C – 2000 ± 500 mPas. The aliphatic unsaturation introduced into such a polymer by the butene diol or maleic anhydride or acid should result in aliphatic unsaturation of not more than 1.5 double bonds/mole of polymer. Also the ratio of aliphatic unsaturation to aromatic unsaturation should be less than 0.1 and preferably around 0.07 or less. The amount of aliphatic unsaturation and the ratio can be controlled by any method known to those skilled in the art of polymerization. For example, the amounts of the various monomers can be controlled in the ratio of monomers with and without aliphatic unsaturation. An NMR curve for the Neoxil® 954 resin emulsion is shown in Fig. 2. The NMR was performed on a Varian EM—360 60 MHz proton NMR Spectrometer with a sweep time of 5 minutes and sweep width of 10 ppm and an end of sweep of 0 ppm and a zero reference of tetramethylsilane (TMS) and an ambient sample temperature and with $DCCl_3$ solvent. The amount of the film forming polymer in the aqueous treating composition is preferably in the range of 1 to 20 weight percent of the solids of the aqueous treating composition.

In producing the aforementioned esterified epoxy resins or epoxidized polyester resins, the starting materials in the process are controlled by any method known to those skilled in the art to produce the film forming polymer with an amount of aliphatic unsaturation of 1.5 double bonds/mole of polymer or less and preferably about 1.14 to 1.4 with a ratio of aliphatic unsaturation to aromatic unsaturation of not greater than 0.1. For instance, the monomer raw materials can be used in such ratios that any unsaturated raw material does not contribute to the polymeric material in such a great extent to increase the ratio over 0.1 or to yield an amount of unsaturation of greater than 1.5.

The method of determining the amount of unsaturation per mole of polymer can be any method known to those skilled in the art. For example, numerous wet chemical analytical techniques are known, where the double bonds are hydrogenated, halogenated and the like and the uptake of hydrogen or halogen is measured.

The method of determining the ratio can be any method known in the art, but the method preferably involves utilizing a Fourier transform infrared spectrometer (FTIR). For a given dried polymer film sample, the absorbance at 1647 reciprocal centimeters is recorded and the absorbance at 1608 reciprocal centimeters is recorded. Then the ratio of the aliphatic unsaturation to the aromatic unsaturation, or the ratio of absorbance at 1647 reciprocal centimeters to that of the absorbance of 1608 reciprocal centimeters is obtained by dividing absorbance at 1647 cm$^{-1}$ by that at 1608 cm$^{-1}$ to give the ratio which should be less than 0.1 and preferably less than 0.07. This approach determines the relative degree of alkene unsaturation in each film obtaining the absorbance at 1647 cm$^{-1}$ and dividing this absorbance by that absorbance associated with C = C in plane vibration of aromatic structures. It is preferred in obtaining the absorbance

values at the designated wave lengths that the values are used from the FTIR's data station and not interpolated from the charts. When other techniques are used to determine the ratio the value of the ratio may be other than 0.1. As long as this other value for the ratio is equivalent to the 0.1 or less value as achieved by the FTIR method, the benefits of the present invention can be achieved.

The aqueous chemical treating composition has not any other components that are outside the range of amounts for aliphatic unsaturation and the range of values for the ratio of aliphatic unsaturation to aromatic unsaturation. Each additional compound in the aqueous chemical treating composition should have an aliphatic unsaturation of less than 1.5 double bonds/mole of compound. Also the ratio for each compound should not exceed 0.1.

In addition, the aqueous chemical treating composition should not have any large amounts, i.e., greater than 1 weight percent of the aqueous chemical treating composition of polymer chain extending and condensation crosslinking inducing reactants. Preferably the aqueous chemical treating composition is essentially free of these materials. Nonexclusive examples of these materials include catalysts that induce such reactions with the material already present in the treating composition and reactants having moieties such as the following that could undergo condensation reaction:

$$COOH + NH_2$$

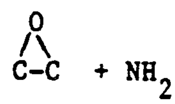

$$OH + COOH$$

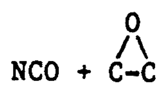

These types of reactions should be kept to a minimum to provide a low crosslink density to promote wettability.

Any saturated and noncondensation reacting material usually found in aqueous chemical treating composition for glass fibers can also be present in the aqueous chemical treatment of the present invention. Nonexclusive examples include various organo silane coupling agents, various lubricants and processing aides. In utilizing these other materials in producing an aqueous chemical treating composition for glass fibers, a certain amount of aliphatic unsaturation can be tolerated as long as it does not take the ratio of aliphatic unsaturation to aromatic unsaturation above 0.1 for the aqeuous chemical treating composition.

Examples of particular components that are utilized to formulate the aqueous chemical treating composition are those having an amount of aliphatic unsaturation of less than around 1.5 double bonds/mole of compounds and having a ratio of aliphatic unsaturation to aromatic unsaturation of not greater than 0.1 include: epoxidized polyester film forming polymer, an organo silane coupling agent, a lubricant and an antistatic agent and water.

When more than one film forming polymer is used, an epoxy-containing polymer or copolymer can be used along with a nontacky polymer. Separate aqueous emulsions of the epoxy-containing polymer and the nontacky film forming polymer can be combined into a single emulsion or one single aqueous emulsion can be prepared wherein the epoxy-containing polymer and nontacky film forming polymer are solubilized, dispersed or emulsified in the aqueous emulsion. In preparing a single emulsion having the blended epoxy-containing polymer and nontacky film forming polymer, any nonionic, cationic, anionic or amphoteric emulsifying agents can be used. It is preferred to use nonionic emulsifying agents having an HLB in the range to match the ionic character of the blended polymers. Nonexclusive examples include: epoxy-containing polymers or copolymers which have an epoxy equivalent weight in the range of 180 to 230 grams of polymer for 1 gram equivalent of epoxide. The epoxy-containing polymer or copolymer assists in yielding treated glass fibers with good wettability for fast wet-out of the glass fibers in polymeric matrices such as saturated and unsaturated polyesters and epoxies. Epoxy polymers with epoxy equivalent weights greater than 230 grams of polymer for one gram equivalent of epoxide will produce a glass fiber reinforced polymeric panel that is hazy. If the epoxy equivalent weight is less than 180 grams, the treated glass fibers are too sticky. The epoxy equivalent weight or epoxide equivalent which is defined as the weight of resin in grams which contains one gram equivalent of epoxy can be determined by any method known to those skilled in the art. Nonexclusive examples include infrared spectroscopy and wet analysis such as the titration method with sodium hydroxide after the addition of pyridinium chloride in pyridine to the epoxy polymer. When the epoxy resin is used its amount in the aqueous treating composition can vary from a minor to a major portion of the solids of the aqueous treating composition. The epoxy resins that can be used can be epoxy resins prepared from bisphenol A and a comonomer such as epihalohydrin to form the diglycidyl ether of bisphenol A. Epoxy resins obtained by the use of hydroxyl compounds such as

4-isopropylidene bis(2,6-dibromophenol), dihydroxybenzenes, 1,1,2,2-tetra(p-hydroxy phenyl) ethane, 1,4-butane diol, glycerol, polyoxalkylene (glycol), linoleic dimer acids, 1,1,3-tris(p-hydroxyphenyl)-propane and the like in reaction with epihalohydrin can also be used. Also, epoxy resins produced from aliphatic glycidyl ethers can be used. Also, epoxy resins produced by the reaction of monoepoxy compounds with themselves or other epoxy generating compounds can be used, for example, unsaturated monoepoxy compounds may be homopolymerized through the unsaturation to produce polyepoxy polymer like poly(allyl glycidyl ether). Particularly, suitable epoxy resins are the phenolic epoxies which are obtained by the reaction of a stoichiometric excess of an epihalohydrin such as epichlorohydrin with a polyhydric phenol such as bis(4-hydroxyphenol)-2,2-propane, bis(hydroxyphenyl) methane which is obtained by the acid condensation of two moles of phenol with one mole of formaldehyde, hydroquinone, resorcinol or with polyhydroxy alcohol such as polyalkylene glycols, sorbitol, glycerol and the like. By varying these portions of the epihalohydrin, polyhydroxy compound and/or by varying the reaction conditions, compounds of low, intermediate or higher molecular weights may be produced which range from liquids to solids. Useful commercially available epoxy resins include that available from Shell Chemical Corporation under the trade designation Epon® 828 epoxy resin, and the epoxies available from Ciba-Geigy under the trade designation Araldite® resins, and from Dow Chemical Company under the trade designations D.E.R. or D.E.N. resins, and the Epi-Rez® resins available from Celanese Polymer Specialties Company. A suitable epoxy-containing copolymer which can be used is the epoxidized polyvinyl acetate copolymer available from National Starch under the trade designation 1971 resin.

The aqueous soluble, dispersible or emulsifiable epoxy-containing polymer can have an emulsion or dispersion produced with any suitable surfactant known to those skilled in the art. For example, one or more surfactants which are condensates of ethylene oxide with hydrophobic bases formed by condensation with propylene oxide with propylene glycol can be used. For example, the Pluronic® F—108 surfactant manufactured by BASF Wyandotte Industrial Chemical Group can be used to form a suitable emulsion or dispersion.

Also when the epoxy-containing polymer or copolymer is used in conjunction with the limited solubility of the tack film forming polymer, the limited tack film forming polymer in the epoxy-containing polymer furthers the compatibility of the two polymers or polymeric emulsions. This compatibility assists in achieving a reduction in the tackiness of the film of the dried residue of the aqueous treating composition on the glass fibers over that of glass fibers having a dried residue of just epoxy-containing polymer. The reduction in tackiness translates into a reduction in matchsticking of the chopped treated glass fibers due to strand to strand adhesion.

In addition to the aqueous soluble, dispersible or emulsifiable film forming polymer, the aqueous treating composition also has present one or more acryloxy-containing or methacryloxy-containing organo-functional coupling agents. The coupling agents can be organo-functional silane coupling agents or organo-functional Werner compounds and the like having on the organofunctioning portion of the molecule the following moiety:

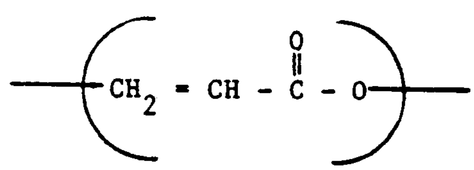

as well as methacryloxy and substituted acryloxy residues such as:

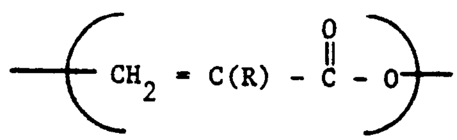

, and

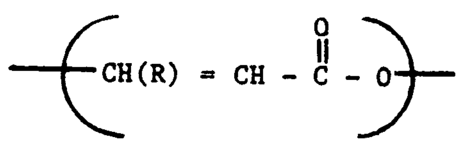

where R is a lower alkyl group having up to 4 carbon atoms. A nonexclusive example of such a coupling agent is methacryloxy alkyl trialkoxy silane. The alkoxy group and the alkyl group have from one to five carbon atoms for the alkyl group. Preferably, the methacryloxyalkyl trialkoxy silane is methacryloxypropyltrimethoxy silane. The methoxy groups of the methacryloxypropyltrimethoxy silane must be hydrolyzed before the silane is incorporated into the aqueous treating composition. This is accomplished by adding an essentially hydrocarbon organic acid such as acetic acid to the coupling agent and stirring for a sufficient time and at a sufficient temperature to hydrolyze one or more of the $SiOCH_3$ groups to form methanol and one or more SiOH groups. Sufficient water is used in the hydrolysis to impart sufficient activity to the acetic

acid. The amount of silane coupling agent used in the aqueous treating composition is an effective coupling amount in the range of 0.1 to 10 weight percent of the solids of the aqueous treating composition, where the larger quantities are ordinarily used at controlled humidity conditions.

In addition to the foregoing components of the aqueous chemical treating composition, there is a glass fiber cationic lubricant in an effctive lubricating amount. The lubricants are those which impart lubricity to the glass fibers and gathered bundles of glass fibers and strands and which are water soluble cationic materials. Examples include acid solubilized, fatty acid amides such as stearic amide. The fatty acid amides are both saturated and unsaturated and the acid group contains from 4 to 24 carbon atoms. Also, anhydrous acid solubilized polymers of the lower molecular weight unsaturated fatty acid amides are included. Also included are the alkyl imidazolines, which are formed by reaction of fatty acids with polyalkylene polyamines under conditions to produce ring closure. A particularly suitable cationic lubricant is a polyamino amide material having an amine value of about 200 to 800 that is preferably prepared by using fatty acids at least one of which is pelargonic acid. Also this material can be solubilized further with acetic acid. A nonexclusive example of such a material is the polyalkyleneimine partially amidated with fatty acids like pelargonic acid that is commercially available from Emery Industries, Inc. under the trade designation Emerylube® 6717. This material is a viscous liquid with a pour point of 55, a density in [lbs/gallon of 8.3] 0.99 kg/l, a Gardner color of 10, a cloud point of less than 25°C, a flash point of (540°F) 282°C and is soluble in water and dispersible in mineral oil. Another suitable material is manufactured under the trade designation Cirrasol® 185A which is an anhydrous material with a deep reddish amber color which is a viscous liquid at room temperature. It is water dispersible and a one pecent solution has a pH of 8.9 to 9.4. When the cationic water soluble glass fiber lubricant contains a reactable nitrogen group, the effective amount of the lubricant should be limited to substantially prevent any crosslinking of any epoxy-containing polymer that may be present by the nitrogen-containing groups of the glass fiber lubricant. Generally, the effective amount of the glass fiber cationic lubricant is in the range of 0.05 to 0.5 weight percent of the aqueous chemical treating composition.

In addition to having chemically treated glass fibers that have desired characteristics for reinforcing polymeric matrices, the treated glass fibers must be processable into the reinforced product. Reinforced plastic panels are produced with chopped strand reinforcement. The glass fibers are produced initially as continuous fibers and they are subsequently chopped. When the fibers or strands or rovings are chopped from dry continuous material, an abundance of static and chopper cling can ruin the processability of the glass fibers for producing the reinforced panels. To overcome any static and assist in reducing chopper cling, the aqueous chemical treating composition has an antistatic agent that is a cationic organic quaternary ammonium salt having alkoxy moieties. After extensive experimentation into incorporating antistatic agents into the aqueous chemical treating composition, it was discovered that the cationic organic alkoxylated quaternary ammonium salt antistatic agent in the absence of inorganic antistats resulted in good weatherability of fiber reinforced polymeric matrices. Generally, the cationic organic alkoxylated quaternary ammonium salt antistatic agent has a formula such as:

$$\left[ \begin{array}{c} R_4 \\ R_3 - \overset{+}{N} - R_1 \\ R_2 \end{array} \right] \quad X^-$$

wherein one or more moieties of $R_1$, $R_2$, $R_3$ and $R_4$ can be the same or different alkoxy moieties with or without methylene groups and with a terminal alcoholic group such as:

$$R'''O-(R''O)_b-(R')_n-$$

wherein R′ is a methylene group ($CH_2$) and n is an integer from 0 to 10 or more; and wherein R″ is an ethylene group or propylene group or mixture thereof and b is an integer from 1 to 10 or more; and wherein R‴ is hydrogen or a lower alkyl group having one to ten carbon atoms.

When less than four of the groups $R_1$, $R_2$, $R_3$ and $R_4$ are alkoxy groups, the remaining non-alkoxy groups $R_1$, $R_2$, $R_3$ and $R_4$ are alkyl groups having 1 to 30 carbon atoms.

$X^-$ can be any organic or inorganic anions like carboxylates, sulfonates, sulfates, phosphates and halide ions. This antistatic agent can be produced by any method known in the chemical art for producing quaternary ammonium salts with alkoxy moieties.

Preferably, the cationic organic alkoxylated quaternary ammonium salt antistat has a formula such as

$$[(R_5)_y - N^+ - (R_6)_z]\, X^-$$

wherein:

$R_5$ is the same alkoxy moiety such as:

$$R'''O-(R''O)_b-(R'_a)-$$

where R' is methylene ($CH_2$) and a is an integer of 1 to 5, and
where R'' is ethylene and b is an integer from 2 to 8, and
where R''' is hydrogen or a methyl group, and
wherein y is an integer of 3 or 4, and
wherein when y = 3 then Z = 1 and when y = 4 then Z = 0, and
wherein $R_6$ is a long chain alkyl having 6 to 25 carbon atoms, and
wherein $X^-$ is $Cl^-$ or $Br^-$, and
wherein preferably the acid number of the material is at least 10.

A nonexclusive example of the cationic organic alkoxylated quaternary ammonium salt antistatic agent include the material commercially available under the trade designation Neoxil® AO 5620 material available from Savid S.p.A., Como, Italy. This material has the NMR curve of Figure 1, a molecular weight of 1010 Mn and 1140 Mw, an acid number of 10—20 mg KOH/p and a pH for 1 percent solution in water of 4—6. The IR of Figure 3 was obtained from a dried film cast from the Neoxil® AO 5620 material.

The NMR of Figure 2 was performed on a Varian E—360 60 MHz proton NMR Spectrometer where the spectrum amplitude was 80, the filter was 0.1 sec, the RF power was 0.05 mg, the sweep time was 5 minutes, the sweep width was 10 ppm with an end of sweep at 0 ppm, and the nucleus was hydrogen, and the zero reference was tetramethylsilane (TMS) and with an ambient sample temperature and with $DCCl_3$ solvent.

The amount of antistatic agent is enough to provide both an antistatic effect and an effect in the reduction in chopper cling without resulting in matchsticking nor in detrimentally affecting weatherability. The amount of the organic quaternary ammonium antistat generally is at least an amount of around 0.05 weight percent of the aqueous treating composition. Too large an amount of the organic quaternary ammonium antistat leads to increased chopper cling and is therefore, detrimental rather than beneficial. Generally, the amount of the organic antistat is in the range of 0.05 to 0.4, and preferably 0.05 to 0.15 weight percent of the aqueous chemical treating composition for clear translucent panel production. Where filled panels are produced, the amount of the organic antistat can range up to the 0.3 or 0.4 weight percent amount.

The aqueous chemical treating composition is essentially free of any inorganic antistatic agents. Nonexclusive examples of such inorganic antistatic agents are chromic chloride, alkali metal and alkaline earth metal chlorides such as lithium chloride and magnesium chloride which detrimentally affected weatherability.

The choppability of the chemically treated glass fibers results in low static generation but a detrimental quantity of choper cling may occur, for this reason the aqueous chemical treating composition also has a strand hardening agent. This material reduces the cling without adversely causing matchsticking or lowering panel clarity. An effective amount of such a strand hardening agent increases strand integrity to decrease chopper cling. The strand integrity should not be increased to too great an extent, since this may result in increased matchsticking. The suitable strand hardeners are self crosslinkable materials selected from aldehyde condensate polymers such as melamine formaldehyde, hexakis/methylol-containing condensates, monomers, dimers, trimers and higher oligomers, where for the phenol or resorcinol, compounds include cresol and mixtures of its isomers, xylenol or mixtures of its isomers, a mixture of homologs of phenol and dihydric phenols such as resorcinol, cresorcinol, and meta-xylorcinol. The aldehyde includes any methylene donor that can be used in lieu of formaldehyde, for example, paraformaldehyde, hexamethylene-tetramine, acid aldehyde, furfural and mixtures thereof. The aldehyde or methylol condensates can be used in conjunction with acid or basic catalysts. It is preferred to have one or more melamine formaldehyde resins because of their ease in crosslinking and their compatibility with the other polymers in the composition. A particularly suitable melamine formaldehyde resin in the aqueous melamine formaldehyde resin available from Monsanto Company under the trade designation Resimene 841 which has less than two percent free formaldehyde and less than 5 percent methanol and has a boiling point of (210°F) 98.9°C. The Resimene 841 also has a vapor pressure of 95 for methanol and 17.5 for water, a vapor density of 1.11 for methanol and 0.64 for water, a colorless, clear mobile liquid appearance, specific gravity at (77°F) 25°C of 1.25 and a percent volatile by volume percent of 29. Another strand hardening agent that may be used is poly(vinyl pyrrolidone). The amount of the strand hardener is any amount equivalent to an amount of melamine formaldehyde resin like Resimene 841 material in the range of at least 0.1 weight percent of the aqueous treating composition. Larger quantities can be used, but an amount in excess of 0.5 weight percent of the aqueous chemical treating composition does not provide any additional benefits. Preferably, the amount is in the range of 0.1 to 0.15 weight percent of the aqueous chemical treating composition. The amount of poly(vinyl pyrrolidone) used should not exceed 0.5 weight percent of the aqueous treating composition, since the poly(vinyl pyrrolidone) may reduce the wet-out characteristics of treated glass fibers and give the treated glass fibers an undesirable degree of hardness.

Although other additional film forming polymers, coupling agents, lubricants, processing aids and thickeners can be employed in the aqueous chemical treating composition of the presenting invention, the aqueous chemical treating composition is essentially free of any epoxy curing agents, whose sole function in the aqueous sizing composition would be to crosslink the epoxy-containing polymer or copolymer. In addition, the aqueous chemical treating composition is essentially free of any material which would not be solubilizable in the limited tack film forming polymer or in the blend of epoxy-containing polymer or

copolymer and limited tack film-forming polymer. Such a material is the nonionic water insoluble hydrocarbon glass fiber lubricants such as hydrogenated hydrocarbon oil. Typically, the water insoluble lubricant is a hydrogenated or saturated fatty acid ester of glycerol and the aqueous chemical treating composition is essentially free of these types of materials.

The aqueous chemical treating composition has a sufficient amount of water to give a total solids for the composition that is sufficient to enable the glass fibers to be treated during their formation with the aqueous chemical treating composition. Generally, the total solids of the aqueous composition is in the range of 1 to 30 weight percent and preferably 3 to 10 percent. In all events, the amounts of the solid components for an aqueous chemical treating composition should not exceed that amount which will cause the viscosity of the solution to be greater than about 100 mPas at 20°C. Aqueous solutions having a viscosity of greater than 100 mPas at 20°C are very difficult to apply to glass fibers during their formation without breaking the fibers. It is preferred that the viscosity of the size be between 1 and 20 mPas at 20°C for best results. Chemical treating compositions with thixotropic gelling or foaming agents can have known viscosities for gels and foams used to treat glass fibers. The pH of the aqueous chemical treating composition is below about 7, and preferably should be in a range of 4.8 to 5.2 to maintain the stability of the composition. The aqueous chemical treating composition can be made by combining the components simultaneously or sequentially.

The aqueous chemical treating composition can be applied to any fiberizable glass material such as "E-glass", "621-glass" and low or free boron and/or fluorine derivatives thereof and glass fiber compositions known as "A-glass", "C-glass" and "S-glass". It is preferred when preparing chemically treated glass fibers to be used in the manufacture of clear or translucent polymeric panels that the fiberizable glass composition should result in glass fibers which give a blue hue or cast when they are used to reinforce the acrylic polyester matrix resins. Preferably, the glass fiber compositions give a refractive index for the glass fibers in the range of about 1.5495 to 1.5740. Higher refractive indexes for the glass give an undesirable bronze cast to clear panels reinforced with fibers. Most preferably the refractive index for the glass fibers is in the range of 1.5495 to 1.557.

The aqueous chemical treating composition can be applied to the glass fibers by any method known to those skilled in the art such as during the formation of the glass fibers after the glass fibers have cooled to a sufficient temperature to allow the application of the aqueous chemical treating composition. The aqueous chemical treating composition, typically referred to as a sizing composition, is applied to these glass fibers by applicators having belts, rollers, sprays and the like. The treated glass fibers then can be gathered into one or more strands and collected into a package commonly referred to as a forming package. Also, the glass fibers can be collected into one or more strands and chopped as a wet chopped product. Also, the glass fibers can be collected into one or more strands and chopped as a wet chopped product. Also, the glass fibers can be gathered into one or more strands and collected as a roving. The glass fibers are dried to reduce their moisture content, and preferably whatever the form of the chemically treated glass fibers, they are dried at temperature and time conditions equivalent to a temperature in the range of about (250°F) 121°C to less than (300°F) 149°C for 11 hours. The drying can be accomplished in any conventional glass fiber drying oven such as forced air ovens, dielectric ovens, and the like. The dried glass fibers have a dried residue of the aqueous chemical treating composition present on the surfaces of the glass fibers making up the strands. Preferably, the amount of the dried residue on the glass fibers is in the range of 0.5 to 1.2 weight percent LOI (loss on ignition).

The dried glass fibers having the residue of the aqueous chemical treating composition can be used in any process for producing polymeric reinforced polymers such as saturated and unsaturated polyesters and epoxies. One process in which the glass fibers are particularly suitable is the formation of clear or translucent acrylic polymer glass fiber reinforced panels. With the high speed commercial operations used in producing glass fiber reinforced clear and translucent panels, the glass fibers with the dried residue of the aqueous chemical treating composition of the present invention is ideally suited. The glass fibers when chopped have very good wet-out in the polymeric matrix within the limitations of the high speed operation for producing the panels. The glass fibers with the dried residue of the aqueous chemical treating composition can be supplied to such an operation as dry chopped glass fiber strand or as roving which is then chopped into the polymeric matrix which is travelling on a conveyor belt on a releasable substrate such as cellophane. The chopped glass fiber strands are dispersed somewhat uniformly over the polymeric matrix and the glass fibers settle and become wet-out in the polymeric matrix. The glass fiber containing polymeric matrix is then cured in a suitable oven to produce the glass fiber reinforced panels. The panels have good clarity with little fiber prominence. The treated glass fibers of the present invention can be used in translucent, unfilled panel systems and also in filled systems such as those having 12 to 50 weight percent calcium carbonate filled, pigmented filled and other filled and unfilled polymeric matrix systems.

In the preferred embodiment of the present invention, glass fibers are attenuated from molten batch and have a refractive index in the range of about 1.554 to 1.557 and have $B_2O_3$ concentration of around 5.2 percent by weight. The glass composition of the glass fibers is preferably in weight percent: $SiO_2$ — 55.8, CaO — 21, $Al_2O_3$ — 14.8, $B_2O_3$ — 5.2, $Na_2O$ — 1.4 and $F_2$ — 0.5, along with trace amounts of materials usually present from batch compounds used to obtain the aforementioned components of the glass. The glass fibers are coated with the aqueous chemical treating composition during the formation of the glass fibers from a multitude of orifices in a bushing of a glass-melting furnace by a belt type binder applicator.

The aqueous chemical treating composition has a single aqueous emulsion having bisphenol polyester film forming polymer available from Savid under the trade designation Neoxil® 954 as the sole polymeric material for film formation. The bisphenol polyester or esterified epoxy film forming polymer has an amount of aliphatic unsaturation of less than 1.4 double bonds/mole of polymer and has a ratio of aliphatic unsaturation to aromatic unsaturation which is less than 0.1 and which is most preferably around 0.07. The preferred silane coupling agent is the gamma methacryloxypropyltrimethoxy silane available from Union Carbide Corporation under the trade designation A174 silane, and the amount of the A174 silane is preferably in the range of 2.7 to 5 weight percent of the solids of the aqueous chemical treating composition. The water soluble cationic glass fiber lubricant is preferably the Emerylube® 6717, which is present in an amount of 1 to 2.5 weight percent of the solids of the aqueous chemical treating composition. The antistatic organic agent that is cationic quaternary ammonium salt with ethoxylation is the Neoxil® AO—5620 antistat which is present as the sole antistat used in an effective amount of 0.05 to 0.15 weight percent of the aqueous treating composition. Also it is preferred to have present a strand hardening agent which is Resimene 841 melamine formaldehyde in an amount of 0.1 to 0.15 weight percent of the aqueous treating composition. The water which is present to make up the aqueous chemical treating composition in that amount to give a total solids preferably around 5 to 6 weight percent of the aqueous chemical treating composition. The amount of the bisphenol polyester resin is the remainder of the solids from the amounts of the coupling agent, lubricant, antistat and strand hardener. The pH of the aqueous chemical treating composition is preferably in the range of 5.5 to 6.2.

The aqueous chemical treating composition is prepared by hydrolyzing methacryloxypropyltrimethoxy silane with acetic acid in an amount of about 1 milliliter of acetic acid for about 20 grams of the silane in a premix tank. The hydrolyzation is performed by adding the acetic acid to 10 to 20 weight percent of the water to be used in preparing the chemical treating composition and adding the silane to this mixture with stirring until complete hydrolyzation occurs. The cationic glass fiber lubricant is added to hot water (170°F) 76.7°C with stirring where the amount of water is about 1 percent of the total amount of water used in preparing the aqueous chemical treating composition in a premix tank. The aqueous emulsion of the bisphenol polyester as about 46 percent solids is combined with about twice its weight of water in a main mix tank. The hydrolyzed silane and glass fiber lubricant are added to the main mix tank. The cationic organic ethoxylated quaternary ammonium salt antistatic agent is combined with warm water in about a 1 to 16 ratio and added to the main mix tank. Any melamine formaldehyde resin is combined with water in a ratio of about 1 to 300 and added to the main mix tank. A small amount of antifoaming agent like SAG 10 can be added and the mix which has been agitated is diluted to the final desired volume with water. The final pH of the aqueous chemical treating composition is then adjusted to be in the range of 5.5 to 6.2 with a compatible organic acid such as acetic acid.

Preferably, the aqueous chemical treating composition is applied to green glass having a refractive index of about 1.555 during the formation of the glass fibers where the fibers have a diameter which can range from $25.16 \times 10^{-5}$ to $247.65 \times 10^{-5}$ cm ($10.3 \times 10^{-5}$ to $97.5 \times 10^{-5}$ inch) or more cm and preferably is around 88.9 to $101.6 \times 10^{-5}$ cm (35 to $40 \times 10^{-5}$ inch). The aqueous chemical treating composition is applied to the glass fibers to give an add-on of the chemical treating composition in the range of 0.5 to 8 percent LOI (Loss on Ignition). The glass fibers are preferably G, H or K fibers gathered into strands to give constructions like G—67 (or H—55 or K—37) strand or the like. The strands of glass fibers are collected on a winder to produce a roving package and a plurality of the roving packages are dried in a Michigan oven at a temperature in the range of about (220° to 300°F) 104—149°C for 11 hours. The roving can then be used in a process for producing clear or translucent acrylic polyester or epoxy panels by chopping the roving into chopped strand having a length of about (1/16) 0.159 cm of an inch to (2 inches) 5.08 cm, preferably (1 inch) 2.54 cm. the chopped strands fall into the matrix resin which is present on a moving conveyor with a release substrate such as cellophane separating the matrix from the conveyor belt. The chopped glass fiber strand containing matrix resin is conveyed to an oven where the panels are heated to cure.

The invention and preferred embodiment are further illustrated by the following examples.

Comparative Example 1

A (50 gallon) 189.27 liter aqueous chemical treating composition was prepared with the components of Table I.

TABLE I

| Component | Wt. in grams | Wt. % Solids | Weight % of Aqueous Treating Composition |
|---|---|---|---|
| Gamma-methacryloxy-propyltrimethoxy silane | 380 | 2.7 | 0.16 |
| Acetic acid | 25 | - | 0.01 |
| Water for silane | 22720 | - | - |
| Cationic glass fiber lubricant (Emery® 6717 lubricant) | 151.5 | 1.4 | 0.08 |
| Water for lubricant | 1895 | - | - |
| Aqueous emulsion of bisphenol A type polyester polymer (Neoxil® 954 resin) | 22,720 | 93.2 | 5.5 |
| Organic quaternary ammonium antistat Neoxil® AO—5620 | 284 | 2.5 | 0.15 |
| Water to result in a volume of 189.29 l | - | - | - |

The glass fibers had the glass composition as defined above and had filament diameters of H or K and were constructed into glass fibers strands having a construction of H—55 or K—37 which were dried at the temperatures of the preferred embodiment. The dried strands were chopped into lengths of about 2.54 cm. These dried chopped glass fiber strands were added to an acrylic polyester matrix by the aforedescribed process to produce translucent panels.

Table IA shows the amount of aliphatic unsaturation, ratio of aliphatic unsaturation to aromatic unsaturation and molecular weight averages for the aqueous emulsion of the esterified epoxy film forming polymer Neoxil® 954 material in Dowanol® solvent and the resulting wettability of the glass fibers in polyester thermoplastic matrix.

TABLE IA

| Aqueous emulsion of esterified epoxy film forming polymer (Neoxil® 954) | Ratio of aliphatic unsaturated to aromatic unsaturation 1st sample/2nd sample | Amount of aliphatic unsaturation double bonds/mole of polymer | Molecular Weight Average gms/mole | | Wettability in Average |
|---|---|---|---|---|---|
| Comparative Example 1 | 0.0694/0.0713 | -- | 20.6 | 31.0 | Good |
| Comparative Example 2 | 0.1172/0.1146 | 1.55 | 25.3 | 36.3 | Bad |
| Comparative Example 4 | 0.0648/0.0720 | 1.14 | 22.1 | 37.5 | Good |
| Comparative Example 3 | 0.0918/0.1022 | -- | 23.9 | 37.4 | Bad |
| Comparative Example 6 | 0.0694/0.0713 | 1.14 | 24.6 | 37.9 | Good |
| Comparative Example 7 | 0.0710/0.0592 | -- | 24.1 | 37.1 | Good |
| Comparative Example 8 | 0.09/0.1 | 1.33 | 28.1 | 42.3 | Marginally Good |
| Comparative Example 9 | 0.0650/0.0770 | 1.28 | -- | -- | Good |

The amount of aliphatic unsaturation can be determined by any method that is well known to those skilled in the art. The values are percentages related to carbon-to-carbon double bondes based on 100 parts of solid resin.

The ratio of aliphatic to aromatic unsaturation was determined at the following wavelengths and in accordance with the following calculation:

Absorbance at wavelength X = (maximum peak value) - (sum of 2 minimum values for peak divided by 2)

Example 5 from TABLE IA

$$\text{ABSORBANCE AT 1647 CM}^{-1} = .0260 - \frac{.0209 + .0194}{2}$$

$$+ \quad .0058$$

$$\text{ABSORBANCE AT 1608 CM}^{-1} = .1045 - \frac{.0269 + .0194}{2}$$

$$= \quad .0813$$

$$\frac{\text{A-1647 CM}^{-1}}{\text{A-1608 CM}^{-1}} \quad + \quad \frac{.0058}{.0813} \quad = \quad .0713$$

The molecular weight averages were determined by gel permeation chromatography.

The wettability was determined by visually observing the time for disappearance of the strand chopped onto polymer matrix in a panel roving line. When the chopped strand wetted out in up to 3 minutes, it was noted at "Good" and when it wetted out in 5 to 6 minutes, it was noted as "Bad". Various dried strands having glass fibers treated with the different film forming polymers of Table 14, where each was present in an aqueous sizing composition as in Comparative Example I were comparatively tested for wettability.

With the amount of aliphatic unsaturation and the ratio of the aliphatic to aromatic unsaturation given in Table IA for the film forming polymer, fast wettability could be obtained. The fast wettability was of the chopped chemically treated glass fiber strands in the matrix polymer. With a value of aliphatic unsaturation over 1.5 double bonds/mole of polymer and a ratio of aliphatic to aromatic unsaturation of more than 0.1, the wettability was bad.

Example 1

A (50 gallon) 189.27 liter aqueous chemical treating composition having the formulation of Table II was applied in the manner of the preferred embodiment to the glass fibers having the glass composition of the preferred embodiment.

TABLE II

| Component | Wt. in grams | Wt. % Solids | Weight % of Aqueous Treating Composition |
|---|---|---|---|
| Gamma-methacryloxy-propyltrimethoxy silane | 380 | 2.7 | 0.16 |
| Acetic acid | 25 | - | 0.01 |
| Water for silane | 22720 | - | - |
| Cationic glass fiber lubricant (Emery® 6717 lubricant) | 151.5 | 1.4 | 0.08 |
| Water for lubricant | 5,000 | - | - |
| Aqueous emulsion of bisphenol A type polyester polymer/ in Dowanol (Neoxil® 954 resin) | 22,720 | 94.1 | 5.5 |
| Organic quaternary ammonium antistat Neoxil® AO—5620 | 284 | 2.6 | 0.15 |
| Resimene 841 resin melamine formaldehyde resin | 189 | 1.3 | 0.1 |
| Water to result in a volume of 189.27 l | Dilute to volume | - | - |

The glass fibers had a filament diameter of H or K and were gathered into strands constructed as H—55 or K—37. The treated glass fiber strands were dried and were chopped into a length of around 2.54 centimeters. These chopped glass fiber strands were added to a polymeric matrix by the aforedescribed process to produce translucent panels.

For the above examples and Comparative Example 3 of Table III, the aqueous chemical treating compositions were prepared in a manner similar to that of the preferred embodiment. The Comparative Example 2 of Table III had an aqueous chemical treating composition prepared in a manner similar to that shown in US—A—4,110,094. All of the glass fiber strands were formed and treated with the aqueous chemical treating composition in a similar manner to that of the preferred embodiment.

TABLE III

COMPONENTS OF AQUEOUS CHEMICAL TREATING COMPOSITION FOR COMPARATIVE EXAMPLES

| Components of Comparative Chemical Treating Composition | Example 2 g. per 75.5 l/wt% wet/wt% dry | Example 3 g per 18.9 l |
|---|---|---|
| 1/wt% wet/wt | | |
| Aqueous emulsifiable epoxy polymer (Epon 828 resin) | 2400/3.2/67.04 | --/--/-- |
| Surfactant (Pluronic F—108 surfactant) | 260/0.3/7.3 | --/--/-- |
| Polyvinyl pyrrolidone (K—30) | 720/0.95/20.1 | 180/0.95/21.7 |
| Gamma methacryloxy-propyltrimethoxy silane (A—174 silane) | 200/.26/3.4 | 50/0.16/3.6 |
| Acetic acid | 1 cc | -- |
| Glass fiber lubricant (Emerylub® 6717) | 80/0.1/2.2 | 20/0.1/2.4 |
| Aqueous bisphenolic polyester emulsion (Neoxil® 952 polymer with 40 ± 2% solids) | --/--/-- | 1500/3.17/72.3 |
| Water to achieve desired volume | | |

The glass fiber strand constructions were similar and the strands were chopped for addition to a polymeric matrix in a similar manner. The acrylic polyester panel reinforced with the dried chopped glass fiber strand of the comparative examples and Examples 1—13 were prepared in a manner similar to that of the preferred embodiment. Comparative Example 2 has the epoxy polymer and polyvinyl pyrrolidone without the non-tacky film forming polymer. Example 1 of Table II has glass fibers having the dried residue of the aqueous chemical treating composition having only the bisphenolic polyester type of non-tacky film forming polymer without the presence of the epoxy polymer. Both comparative Examples 2 and 3 were devoid of the organic antistat and strand hardener.

Table IV presents further examples showing the performance characteristics of the chemically treated glass fiber strands in processing and in the reinforced polymeric panel. In addition to the strands of Example 1. Examples 2 and 3 show characteristics for strands treated with aqueous chemical treatments like those of Example 1. The chemical treatments of Examples 2 and 3 varied from those of Example 1 by the indicated varying amounts of the cationic organic ethoxylated quaternary ammonium salt antistat and melamine formaldehyde strand hardener. Also shown in Table IV are glass fiber strands treated with aqueous chemical treatments of Comparative Examples 2 and 3 as shown in Table III.

Table IV shows the improvement given by the flass fibers of the present invention compared to the glass fibers of the illustrative examples. The panels reinforced with the glass fibers of the present invention in Example 1 have improved performance in the matchsticking and panel clarity characteristics over the same characteristics of Comparative Examples 2 and 3. Also the examples with amounts of the specific organic antistat and/or strand hardener outside the scope of the present invention gave inferior performance characteristics in matchsticking and choppability. The latter being gauged by chopper and cot cling.

In Table IV, results were obtained by visual observation and grading of the performance characteristics. The best results are those with non or slight ratings or excellent ratings with moderate ratings in not mroe than one characteristic along with slight or excellent ratings as being passable.

TABLE IV

PERFORMANCE RESULTS FOR TREATED GLASS FIBERS

| Strand Sample | Weight of Aqueous Treatment: Organic Antistat | Weight of Aqueous Treatment: Strand Hardener | Process: Choppability Chopper & Cot Cling | Process: Wet-thru | Panel: Strand Matchsticking | Product: Clarity | Product: Weatherability |
|---|---|---|---|---|---|---|---|
| Example 1* | 0.15 | 0 | SLIGHT | EXCELLENT | SLIGHT | EXCELLENT | EXCELLENT |
| Example 1 | 0.15 | 0.1 | VERY SLIGHT | EXCELLENT | NONE | EXCELLENT | EXCELLENT |
| Example 4* | 0 | 0 | MODERATE | EXCELLENT | NONE | EXCELLENT | EXCELLENT |
| Example 5* | 0 | 0.5 | MODERATE | EXCELLENT | NONE | EXCELLENT | EXCELLENT |
| Example 6* | 0.05 | 0 | MODERATE | EXCELLENT | NONE | EXCELLENT | EXCELLENT |
| Example 7* | 0 | 0.1 | MODERATE | EXCELLENT | SLIGHT | EXCELLENT | EXCELLENT |
| Example 8* | 0 | 0.2 | SLIGHT | EXCELLENT | SLIGHT | EXCELLENT | EXCELLENT |
| Example 9* | 0.25 | 0 | SLIGHT | EXCELLENT | SLIGHT | EXCELLENT | EXCELLENT |
| Example 10* | 0.40 | 0 | SLIGHT | EXCELLENT | HEAVY | EXCELLENT | EXCELLENT |
| Example 2 | 0.15 | 0.2 | SLIGHT | EXCELLENT | NONE | EXCELLENT | EXCELLENT |
| Example 3 | 0.25 | 0.2 | MODERATE | EXCELLENT | SLIGHT | EXCELLENT | EXCELLENT |
| Example 2* | 0 | 0 | NONE | POOR | SLIGHT TO MODERATE | MODERATE | GOOD |
| Example 3* | 0 | 0 | -- | -- | MODERATE TO HEAVY | -- | -- |

* Comparative Example

## Claims

1. Glass fiber strands having a plurality of glass fibers, where the glass fibers have at least a portion of their surfaces covered with the dried residue of an aqueous treating composition comprising

an aqueous emulsion of a water soluble, dispersible or emulsifiable bisphenol A polyester film forming polymer,

one or more organo functional acryloxy-containing or methacryloxy-containing coupling agents,

one or more cationic fiber lubricants in an effective lubricating amount, and water in an amount to give a total solids of the aqueous treating composition in the range of from 1—30 weight percent, characterized in that

the bisphenol A polyester thermoplastic film forming polymer having polar functionality and havng an equivalent viscosity of less than 10,000 mPa.s for around a 50 weight percent solids polymeric emulsion, and having no more than an average of 1.5 aliphatic double bonds/mole of polymer, and having a ratio of aliphatic unsaturation to aromatic unsaturation of not greater than 0.1 as measured by IR absorptivity on film dried at room temperature when the polymer has an average of 1.5 aliphatic double bonds per mole, and

the aqueous chemical treating composition has less than around 1 weight percent of chain extension inducing or condensation inducing reactants and containing self-crosslinkable materials as strand hardener selected from aldehyde condensate polymers such as melamine formaldehyde, hexakis/methylol-containing condensates, monomrs, dimers, trimers and higher oligomers, where the phenol or resorcinol, compounds include cresol and mixtures of its isomers, xylenol or mixtures of its isomers, a mixture of homologs of phenol and dihydric phenols such as resorcinol, cresorcinol, and meta-xylorcinol and wherein the aqueous treating composition is essentially free of components having aliphatic unsaturation outside the range of not more than 1.5 aliphatic double bonds/mole of polymer and a ratio of aliphatic to aromatic unsaturation of not greater than 0.1, and the aqueous treating composition comprises a cationic organic quaternary ammonium salt having alkoxy moieties antistatic agent in an amount of 0.05—0.4 weight percent of the aqueous treating composition and the treating composition is essentially free of inorganic antistatic agents and of hydrogenated hydrocarbon oil.

2. Glass fiber strands according to claim 1, characterized in that in addition to the bisphenol A polyester film forming polymer there is present an epoxy-containing film forming polymer blended with the bisphenol A polyester polymer in an aqueous emulsion to form a film forming polymeric system.

3. Glass fiber strands according to claims 1—2, characterized in that the bisphenol polyester resin is internally emulsified with ethoxylation.

4. Glass fiber strands according to claims 1—3, characterized in that the bisphenol A polyester film forming polymer has NMR delta values, obtained with a 60 megahertz proton NMR spectrometer with a sweep time of 5 minutes and sweep width of 10 ppm and an end of sweep of 0 ppm and a 0 reference of tetramethylsilane at ambient sample temperature with deuterated chloroform (DCC13), in ppm of the following: a double peak at 1.4, a singlet at 1.65, a singlet at 2.4, a singlet at 3.65, a singlet at 4.06, a doublet at 5.33 and a series of four peaks at 6.72, 6.84, 7.1 and 7.25.

5. Glass fiber strands according to claim 1, characterized in that the rato of aliphatic unsaturation to aromatic unsaturation is less than 0.09.

6. Glass fiber strands according to claims 1—5, characterized in that the glass has a refractive index in the range of 1.5495 to 1.5740.

7. Glass fiber strands according to claims 1—6, characterized in that the cationic organic alkoxylated quaternary ammonium salt antistatic agent has the infrared spectrophotometric curve having values of:

| Percent Transmission | Reciprocal Centimeters |
|---|---|
| around 78 | 800 |
| around 66 | 920 |
| 49 | 1000 |
| 27 | 1100 |
| 49 | 1240 |
| 68 | 1340 |
| 68 | 1470 |
| 89 | 1640 |
| 36 | 2940 |
| 71 | 3460 |

and has an acid number in the range of 10 to 20.

8. Glass fiber strands according to claims 1 and 7, characterized in that the cationic organic alkoxylated quaternary ammonium salt antistatic agent has the formula:

$$R_4$$
$$R_3 - N^+ - R_1 \qquad X^-$$
$$R_2$$

wherein one or more moieties of $R_1$, $R_2$, $R_3$ and $R_4$ can be the same or different alkoxy moieties with or without methylene groups and with a terminal alcoholic group such as:

$$R'''—O(R''O)_b—R'_n—$$

wherein R' is a methylene group ($CH_2$) and n is an integer from 0 to 10 or more; and wherein R'' is an ethylene group or propylene group or mixture thereof and b is an integer from 1 to 10 or more; and wherein R''' is hydrogen or a lower alkyl group having one to ten carbon atoms, and when

less than four of the groups $R_1$, $R_2$, $R_3$ and $R_4$ are alkoxy groups, the remaining non-alkoxy groups $R_1$, $R_2$, $R_3$ and $R_4$ are alkyl groups having 1 to 30 carbon atoms, and

$X^-$ can be any halide ion.

9. Glass fiber strands according to claims 1, 7 and 8, characterized in that the cationic organic alkoxylated quaternary ammonium salt antistatic agent has the formula:

$$(R_5)_y - N^+ - (R_6)_z X^-$$

wherein:

$R_5$ is the same alkoxy moiety such as:

$$R'''—O(R''O)_b—R'_a—$$

where R' is methylene ($CH_2$) and a is an integer of 1 to 5, and
where R'' is ethylene and b is an integer from 2 to 8, and
where R''' is hydrogen or a methyl group, and
wherein y is an integer of 3 or 4, and
wherein when y = 3 then Z = 1 and when y = 4 then Z = O, and
wherein $R_6$ is a long chain alkyl having 6 to 25 carbon atoms, and
wherein $X^-$ is $Cl^-$ or $Br^-$.

10. Glass fiber strands according to claim 1, characterized in that the strand hardening agent is melamine formaldehyde resin present in an amount of at least 0.1 weight percent of the aqueous chemical treating composition.

11. Glass fiber strands according to claims 1—10, characterized in that the bisphenol A polyester film forming polymer has a weight average molecular weight in the range of about 30,000 to 45,000 and having

a polydispersity index of around 1.12 and a Mz/Mv of around 1.08 constituting the major portion of the solids of the aqueous chemical treating composition, and has a ratio of aliphatic unsaturation to aromatic unsaturation of not greater than around 0.07 as measured by R absorptivity on the film dried at room temperature, the coupling agents are acryloxy-containing gamma-methacryloxypropyltrimethoxy silane coupling agents present in an amount in the range of 0.1 to 10 weight percent of the aqueous chemical treating composition, the cationic fiber lubricant is a polyamino amide cationic lubricant which is a partially amidated polyalkylene amine prepared through condensation with fatty acids when at least one of the fatty acids is pelargonic acid and the water is present in an amount to give a total solids of the aqueous chemical treating composition in the range of 1 to 20 weight percent, and where the pH of the aqueous chemical treating composition is less than 7, and where the aqueous chemical treating composition is essentially free of any chain extension inducing or condensation inducing reactants that undergo condensation crosslinking reaction with the film forming polymer.

12. Process of producing reinforced polymeric matrices using chopped glass fibers of claims 1—11.

**Patentansprüche**

1. Glasfaserstränge mit einer Vielzahl von Glasfasern, wobei mindestens ein Teil der Oberfläche der Glasfasern mit dem getrockneten Rückstand einer wäßrigen Behandlungszusammensetzung bedeckt ist, die enthält eine wäßrige Emulsion eines in Wasser löslichen, dispergierbaren oder emulgierbaren, filmbildenden Bisphenol A-Polyesterpolymer, eine oder mehrere organofunktionelle Acryloxygruppen oder Methacryloxygruppen enthaltende Kupplungsmittel, ein oder mehrere kationische Fasergleitmittel in einer wirksam schmierenden Menge und Wasser in einer Menge, um der wäßrigen Behandlungszusammensetzung einen Gesamtfeststoffgehalt on 1—30 Gew.-% zu verleihen, dadurch gekennzeichnet, daß das thermoplastische, filmbildende Bisphenol A-Polyesterpolymer eine polare Funktionalität und eine Äquivalentviskosität von weniger als 10.000 mPa.s in einer etwa 50 Gew.-% Feststoffe enthaltenden Polymeremulsion und nicht mehr als im Mittel 1,5 aliphatische Doppelbindungen/Mol Polymer aufweist und ein Verhältnis von aliphatischen ungesättigten Gruppen:aromatischen ungesättigten Gruppen von nicht mehr als 0,1, gemessen durch IR Absorption eines bei Raumtemperatur getrockneten Filmes eines Polymeren mit im Mittel 1,5 aliphatischen Doppelbindungen pro Mol, aufweist und die wäßrige chemische Behandlungszusammensetzung weniger als etwa 1 Gew.-% Kettenverlängerung oder Kondensation auslösende Reaktaten aufweist und als Stranghärter selbstvernetzende Stoffe enthält, ausgewählt aus Aldehydkondensationspolymeren, wie Melaminformaldehyd, Hexakis/Methylol enthaltenden Kondensaten, Monomeren, Dimeren, Trimeren und höheren Oligomeren, wobei das Phenol oder Resorzin Verbindungen einschließen, wie Kresol und Mischungen seiner Isomeren, Xylenol oder Mischungen seiner Isomeren, eine Mischung von Phenolhomologen und zweiwertigen Phenolen, wie Resorzin, Kresorzin und meta-Xylorzin, und wobei die wäßrige Behandlungszusammensetzung im wesentlichen frei ist von Bestandteilen, die aliphatische, ungesättigte Gruppen außerhalb des Bereiches von nicht mehr als 1,5 aliphatische Doppelbindungen/Mol Polymer und ein Verhältnis von aliphatischen:aromatischen ungesättigten Gruppen vonicht mehr als 0,1 aufweisen, und die wäßrige Behandlungszusammensetzung als Antistatikum ein kationisches organisches quartäres Ammoniumsalz enthält, das Alkoxygruppen aufweist in einer Menge von 0,05—0,4 Gew.-% der wäßrigen Behandlungszusammensetzung, und die Behandlungszusammensetzung im wesentlichen keine anorganischen Antistatika und hydriertes Kohlenwasserstofföl enthält.

2. Glasfaserstränge nach Anspruch 1, dadurch gekennzeichnet, daß zusätzlich zum filmbildenden Bisphenol A-Polyesterpolymer ein Epoxid enthaltendes, filmbildendes Polymer in Mischung mit dem Bisphenol A-Polyesterpolymer in einer wäßrigen Emulsion vorhanden ist, um ein filbildendes Polymersystem auszubilden.

3. Glasfaserstränge nach Ansprüchen 1—2, dadurch gekennzeichnet, daß das Bisphenol-Polyesterharz durch Ethoxylierung intern emulgiert ist.

4. Glasfaserstränge nach Ansprüchen 1—3, dadurch gekennzeichnet, daß das Film bildende Bisphenol a-Polyesterpolymer NMR-Deltawerte, erhalten mit einem 60 Megahertz Protonen NMR Spektrometer mit einer Abtastzeit von 5 Minuten und einem Frequenzhub des Wobblers von 10 ppm einem Endwobbel von 0 ppm und einem O-Bezug auf Tetramethylsilan bei Raumtemperatur der Probe mit deuteriertem Chloroform ($DCCl_3$) in ppm wie folgt aufweist: ein Doppelpeak bei 1,4, ein Singlett bei 1,65, ein Singlett bei 2,4, ein Singlett bei 3,65, ein Singlett bei 4,06, ein Doublett bei 5,33 und eine Reihe von 4 Peaks bei 6,72, 6,84, 7,1 und 7,25.

5. Glasfaserstränge nach Anspruch 1, dadurch gekennzeichnet, daß das Verhältnis von aliphatischen ungesättigten Gruppen:aromatischen ungesättigten Gruppen kleiner als 0,09 ist.

6. Glasfaserstränge nach Ansprüchen 1—5, dadurch gekennzeichnet, daß das Glas einen Brechungsindex im Bereich von 1,5495 bis 1,5740 aufweist.

7. Glasfaserstränge nach Ansprüchen 1—6, dadurch gekennzeichnet, daß das als Antistatikum dienende kationische, organische, alkoxylierte, quartäre Ammoniumsalz ein Infrarotspektrum mit folgenden Werten aufweist:

| Prozent Durchlässigkeit | Centimeter$^{-1}$ |
|---|---|
| etwa 78 | 800 |
| etwa 66 | 920 |
| 49 | 1000 |
| 27 | 1100 |
| 49 | 1240 |
| 68 | 1340 |
| 68 | 1470 |
| 89 | 1640 |
| 36 | 2940 |
| 71 | 3460 |

und eine Säurezahl im Bereich von 10 bis 20 hat.

8. Glasfaserstränge nach Ansprüchen 1 und 7, dadurch gekennzeichnet, daß das als Antistatikum dienede kationische, organiche, alkoxylierte, quartäre Ammoniumsalz die Formel hat

$$\begin{array}{c} R_4 \\ R_3 - N^+ - R_1 \\ R_2 \end{array} \quad X^-$$

in der einer oder mehrere der Reste von $R_1$, $R_2$, $R_3$ und $R_4$ die gleichen oder unterschiedliche Alkoxygruppen sein können, mit oder ohne Methylengruppen, und mit einer endständigen alkoholischen Gruppe, wie

$$R'''—O(R''O)_b—R'_n—,$$

in der R' eine Methylengruppe ($CH_2$) ist und n eine ganze Zahl von 0 bis 10 oder mehr ist, und in der R'' eine Ethylengruppe oder Propylengruppe oder eine Mischung derselben ist und b eine ganze Zahl von 1 bis 10 oder mehr ist, und in der R''' Wasserstoff oder eine niedere Alkylgruppe mit 1 bis 10 Kohlenstoffatomen ist, und wenn weniger als der Reste $R_1$, $R_2$, $R_3$ und $R_4$ Alkoxygruppen sind, sind die verbleibenden Nichtalkoxyreste $R_1$, $R_2$, $R_3$ und $R_4$ Alkylgruppen mit 1 bis 30 Kohlenstoffatomen, und $X^-$ jedes Halogenion sein kann.

9. Glasfaserstränge nach Ansprüchen 1, 7 und 8, dadurch gekennzeichnet, daß das als Antistatikum dienende kationische, organische, alkoxylierte, quartäre Ammoniumsalz die Formel hat

$$(R_5)_y - N^+ - (R_6)_z\ X^-$$

in der $R_5$ die gleiche Alkoxygruppe ist, wie

$$R'''—O(R''O)_b—R'_a—,$$

in der R' Methylen ($CH_2$) ist und a eine ganze Zahl von 1 bis 5 ist, und in der R'' Ethylen ist und b eine ganze Zahl von 2 bis 8 ist, und in der R''' Wasserstoff oder ein Methylrest ist, und in der y eine ganze Zahl von 3 oder 4 ist, und in der dann, wenn $y = 3$ ist, $z = 1$ ist, und wenn $y = 4$ ist, $z = 0$ ist, und in der $R_6$ ein langkettiger Alkylrest mit 6 bis 25 Kohlenstoffatomen ist, und in der $X^-$ $Cl^-$ oder $Br^-$ ist.

10. Glasfaserstränge nach Anspruch 1, dadurch gekennzeichnet, daß das Stranghärtungsmittel Melaminformaldehydharz ist, anwesend in einer Menge von mindestens 0,1 Gew.-% der wäßrigen chemischen Behandlungszusammensetzung.

11. Glasfaserstränge nach Ansprüchen 1—10, dadurch gekennzeichnet, daß filmbildende Bisphenol A-Polyesterpolymer ein gewichtsmittleres Molekulargewicht im Bereich von etwa 30.000 bis 45.000 und einen Polydispersitätsindex von etwa 1,12 und ein Mz/Mv von etwa 1,08 aufweist und den Hauptanteil der Feststoffe der wäßrigen chemischen Behandlungszusammensetzung bildet und ein Verhältnis von aliphatischen ungesättigten Gruppen:aromatischen ungesättigten Gruppen von nicht mehr als etwa 0,07 aufweist, gemessen durch IR Absorption an einem bei Raumtemperatur getrockneten Film, die Kupplungsmittel Acryloxygruppen enthaltende γ-Methacryloxypropyltrimethoxysilan-Kupplungsmittel

sind, anwesend in einer Menge in dem Bereich von 0,1 bis 10 Gew.-% der wäßrigen chemischen Behandlungszusammensetzung, das kationische Faserleitmittel ein kationisches Polyamino-Amid-Gleitmittel ist, das ein partiell amidiertes Polyalkylenamid ist, hergestellt durch Kondensation mit Fettsäuren, wobei mindestens eine der Fettsäuren Pelargonsäure ist, und Wasser in einer solchen Menge vorhanden ist, um der wäßrigen chemischen Behandlungszusammensetzung einen Gesamtfeststoffgehalt im Bereich von 1 bis 20 Gew.-% zu verleihen, und wobei der pH-Wert der wäßrigen chemischen Behandlungszusammensetzung kleiner als 7 ist und die wäßrige chemische Behandlungszusammensetzung im wesentlichen keine Kettenverlängerung oder kondensation auslösende Reaktanten, die kondensationsvernetzungsreaktion mit dem filmbildenden Polymer eingehen können, enthält.

12. Verfahren zum Herstellen polymerer Matrices unter Verwendung von Stapelfasern nach Ansprüchen 1—11.

**Revendications**

1. Fils de fibres de verre comportant une multiplicité de fibres de verre où les fibres de verre sont revêtues sur au moins une partie de leurs surfaces, du résidu séché d'une composition de traitement aqueuse, comprenant:

une émulsion aqueuse d'un polymère filmogène de polyester de bisphénol A, émulsionnable ou dispersible, soluble dans l'eau,

un ou plusieurs agents de couplage contenant des radicaux acryloxy ou méthacryloxy, organo fonctionnels,

un ou plusieurs lubrifiants de fibres cationiques en une proportion lubrifiante efficace et de l'eau en une proportion telle qu'elle confère à la composition de traitement aqueuse une teneur totale en solides qui varie de 1 à 30% en poids, caractérisés en ce que

le polymère filmogène thermoplastique de polyester de bisphénol A possède une fonctionnalité polaire et possède une viscosité équivalente inférieure à 10.000 mPa.s pour une émulsion polymère à environ 50% en poids de solides et ne possède pas plus d'une moyenne de 1,5 double liaison aliphatique/mole de polymère et possède un rapport de l'insaturation aliphatique à l'insaturation aromatique non supérieure à 0,1, comme mesuré par absorption IR sur pellicule séchée à la température ambiante lorsque le polymère possède une moyenne de 1,5 double liaison aliphatique/mole et

la composition de traitement chimique aqueuse possède moins d'environ 1% en poids de réactifs induisant un allongement de chaîne ou induisant une condensation et contient des matières auto-réticulables à titre de durciseur des fils, choisies parmi des polymères de condensation d'aldéhydes, tels que des monomères, bimères, trimères et oligomères supérieurs, des produits de condensation contenant de la mélamine-formaldéhyde, de l'hexakis/méthylol, où pour le phénol ou le résorcinol, des composés comprennent du crésol et des mélanges de ses isomères, du xylénol ou des mélanges de ses isomères, un mélange d'homologues du phénol et des phénols hydroxylés, tels que le résorcinol, le crésorcinol et le métaxylorcinol et en ce que la composition de traitement aqueuse est sensiblement exempte de composants possédant une insaturation aliphatique qui se situe en dehors de la

plage allant jusqu'à pas plus de 1,5 double liaison aliphatique/mole de polymère et un rapport de l'insaturation aliphatique à l'insaturation aromatique non supérieur à 0,1 et la composition de traitement aqueuse comprend un agent antistatique à base d'un sel d'amonium quaternaire organique cationique possédant des radicaux alkoxy en une proportion de 0.05 à 0,4% en poids par rapport à la composition de traitement aqueuse et la composition de traitement est sensiblement exempte d'agents antistatiques inorganiques et d'huiles hydrocarbonées hydrogénées.

2. Fils de fibres de.verres suivant la revendication 1, caractérisés en ce que en plus du polymère filmogène de polyester de bisphénol A, et présent un polymère filmogène contenant des radicaux époxy en mélange au polymère de polyester de bisphénol A, dans une émulsion aqueuse pour former un système polymère filmogène.

3. Fils de fibres de verre suivant les revendications 1—2, caractérisés en ce que la résine de polyester de bisphénol est émulsionnée de manière interne par éthoxylation.

4. Fils de fibres de verre selon les revendications 1—3, caractérisés en ce que le polymère filmogène de polyester de bisphénol A possède des valeurs delta de RMN, obtenues avec un spectromètre RMN protonique de 60 mégahertz avec une durée de balayage de 5 minutes et une largeur de balayage de 10 ppm et une fin de balayage de 0 ppm et une référence 0 de tétraméthylsilane à la température d'échantillon ambiante avec du chloroforme deutéré (DCC13), en ppm des suivantes: un pic de doublet à 1,4, un singlet à 1,65, un singlet à 2,4, un singlet à 3,65, un singlet à 4,06 un doublet à 5,33 et une série de 4 pics à 6,72, 6,84, 7,1 et 7,25.

5. Fils de fibres de verres selon la revendication 1, caractérisés en ce que le rapport de l'insaturation aliphatique à l'insaturation aromatique est inférieure à 0,09.

6. Fils de fibres de verre selon les revendications 1—5, caractérisés en ce que le verre possède un indice de réfraction qui varie de 1,5495 à 1,5740.

7. Fils de fibres de verre selon les revendications 1—6, caractérisés en ce que l'agent antistatique à base de sel d'ammonium quaternaire alkoxylé organique cationique possède la même courbe spectrophotométrique infra-rouge qui présente les valeurs suivantes:

| Pourcent de transmission | Centimètres$^{-1}$ |
|---|---|
| environ 78 | 800 |
| environ 66 | 920 |
| 49 | 1000 |
| 27 | 1100 |
| 49 | 1240 |
| 68 | 1340 |
| 68 | 1470 |
| 89 | 1640 |
| 36 | 2940 |
| 71 | 3460 |

et possède un indice d'acidité qui varie de 10 à 20.

8. Fils de fibres de verre suivant les revendications 1 et 7, caractérisés en ce que l'agent antistatique à base de sel d'ammonium quaternaire alkoxylé organique cationique répond à la formule:

$$R_3 - \overset{\displaystyle R_4}{\underset{\displaystyle R_2}{N^+}} - R_1 \qquad X^-$$

dans laquelle 1 ou plusieurs symboles $R_1$, $R_2$, $R_3$ et $R_4$ peuvent être des radicaux alkoxy identiques ou différents, avec ou sans groupes méthylène et avec un radical alcool terminal, tel que:

$$R'''—O(R''O)_b—R'_n—$$

dans lequel R' représente un groupe méthylène ($CH_2$) et n représente un nombre entier dont la valeur varie de 0 à 10 et plus et dans lequel R'' représente un radical éthylène ou un radical propylène ou un mélange de ceux-ci et b représente un nombre entier dont la valeur varie de 1 à 10 et plus et dans lequel R''' représente un atome d'hydrogène ou un radical alkyle inférieur possédant de 1 à 10 atomes de carbone et lorsque moins de quatre des symboles, $R_1$, $R_2$, $R_3$ et $R_4$ représentent des radicaux alkoxy, les symboles $R_1$, $R_2$, $R_3$ et $R_4$ du type non alkoxy résiduels, sont des radicaux alkyle qui comportent de 1 à 30 atomes de carbone et $X^-$ peut être n'importe quel ion halogénure.

9. Fils de fibres de verre suivant les revendications 1, 7 et 8, caractérisés en ce que l'agent antistatique à base de sel d'ammonium quaternaire alkoxylé organique cationique répond à la formule:

$$(R_5)_y - N^+ - (R_6)_z \; X^-$$

dans laquelle

$R_5$ représente le même radical alkoxy tel que le suivant:

$$R'''—O(R''O)_b—R'_a—$$

où représente un groupe méthylène ($CH_2$) et a est un nombre entier dont la valeur varie de 1 à 5 et où R'' représente le radical éthylène et b représente un nombre entier dont la valeur varie de 2 à 8 et où R''' représente un atome d'hydrogène ou le radical méthyle et

dans laquelle y représente un nombre entier égal à 3 ou à 4 et

dans laquelle lorsque $y = 3$, $z = 1$ et lorsque $y = 4$, $z = 0$ et

dans laquelle $R_6$ représente un radical alkyle à longue chaîne possédant de 6 à 25 atomes de carbone et dans laquelle $X^-$ représente $Cl^-$ ou $Br^-$.

10. Fils de fibres de verres suivant la revendication 1, caractérisés en ce que l'agent de durcissement du fil est une résine de mélamine-formaldéhyde présente en une proportion d'au moins 0,1% en poids de la composition de traitement chimique aqueuse.

11. Fils de fibres de verre suivant les revendications 1—10, caractérisés en ce que le polymère filmogène de polyester de bisphénol A possède un poids molécullaire moyen en poids qui varie d'environ 30.000 à 45.000 et possède un indice de polydispersité d'environ 1,12 et un Mz/Mv d'environ 1,08, et constitue la fraction majeure des solides de la composition de traitement chimique aqueuse et possède un rapport de l'insaturation aliphatique à l'insaturation aromatique non supérieure à environ 0,07, tel que mesuré par absorption IR sur film séché à la température ambiante, les agents de couplage sont des agents de couplage du type acryloxy-gamma-métacryloxypropyltriméthoxy-silane, présents en une proportion qui varie de 0,1 à 10% en poids du la composition de traitement chimique aqueuse, le lubrifiant des fibres cationique est un lubrifiant cationique du type polyaminoamide, qui est une polyalkylène amine partiellement amidée, que l'on prépare par la condensation avec des acides gras où moins l'un des acides gras est l'acide pélargonique et l'est est présente en une proportion telle qu'elle confère à la composition de triatement chimique aqueuse une teneur totale en solides qui varie de 1 à 20% en poids et le pH de la composition de traitement chimique aqueuse est inférieure à 7 et la composition de traitement chimique aqueuse est sensiblement exempte de tout réactif induisant un allongement de chaîne ou induisant une condensation, qui subit une réaction de condensation-réticulation avec le polymère filmogène.

12. Procédé de production de matières polymères renforcées par l'emploi de fibres de verre hachées des revendication 1—11.

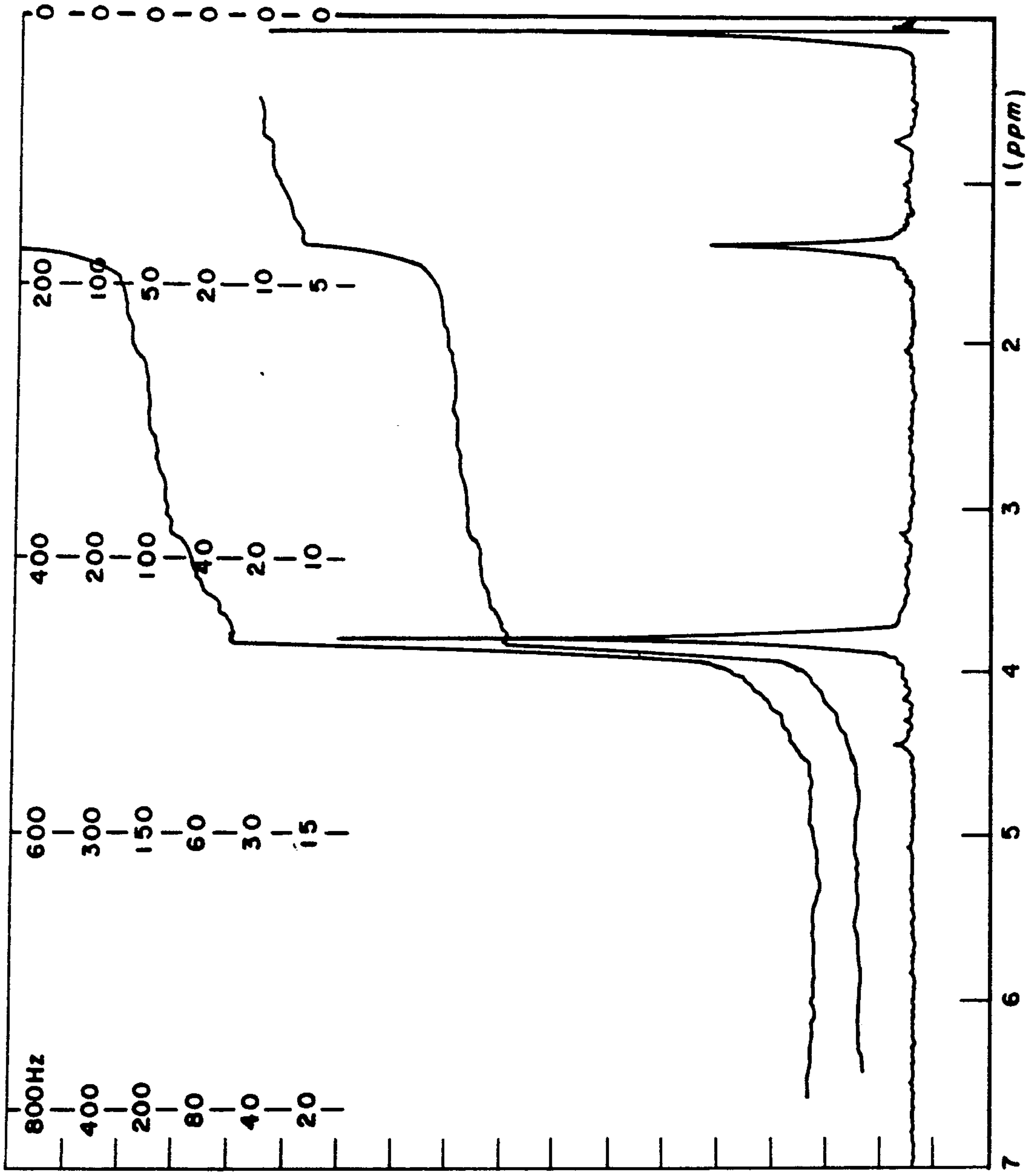
800Hz
400
200
80
40
20
600
300
150
60
30
15
400
200
100
40
20
10
200
100
50
20
10
5
0
1 (ppm)
2
3
4
5
6
7

FIG. 1

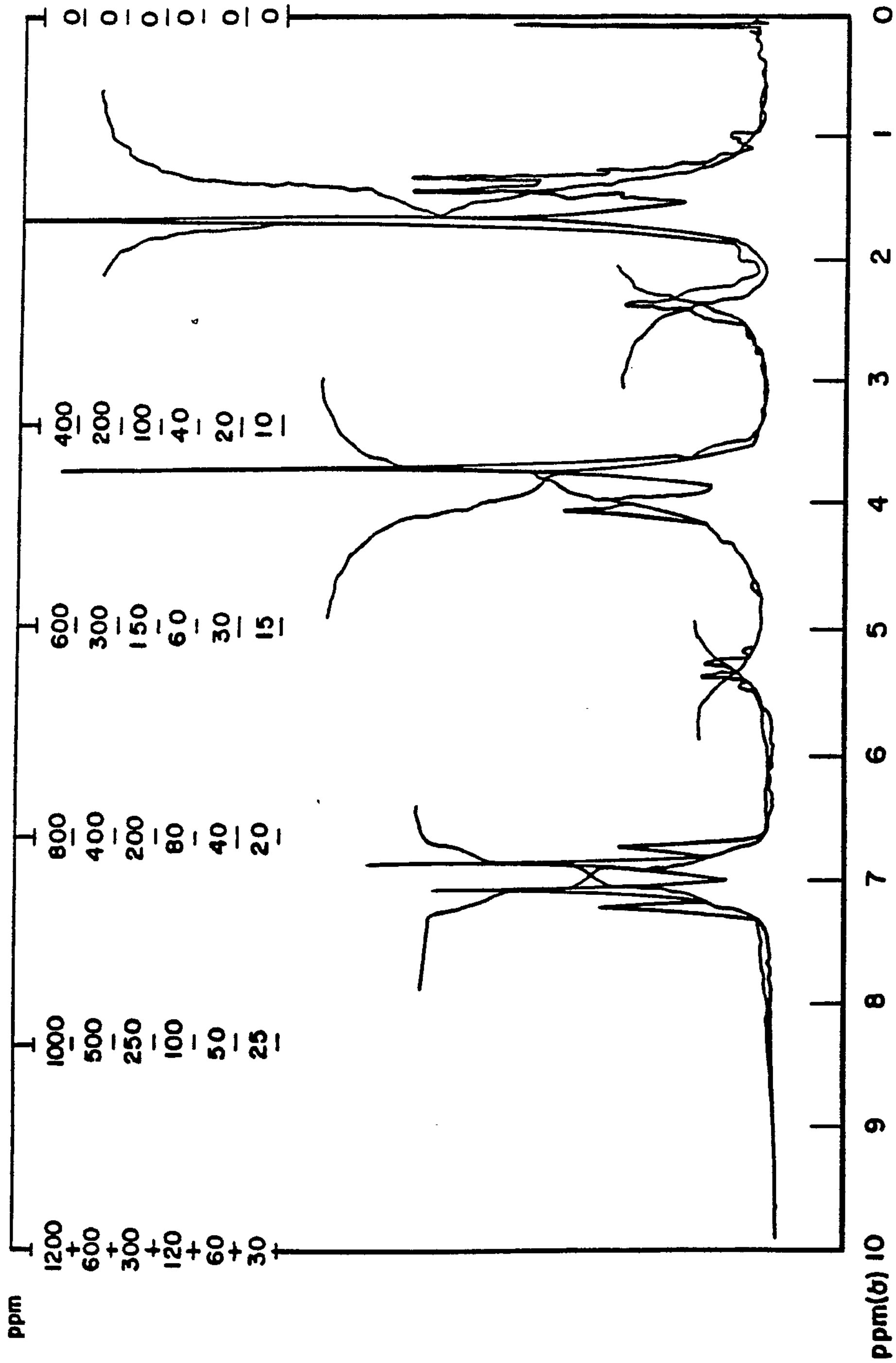


FIG. 2

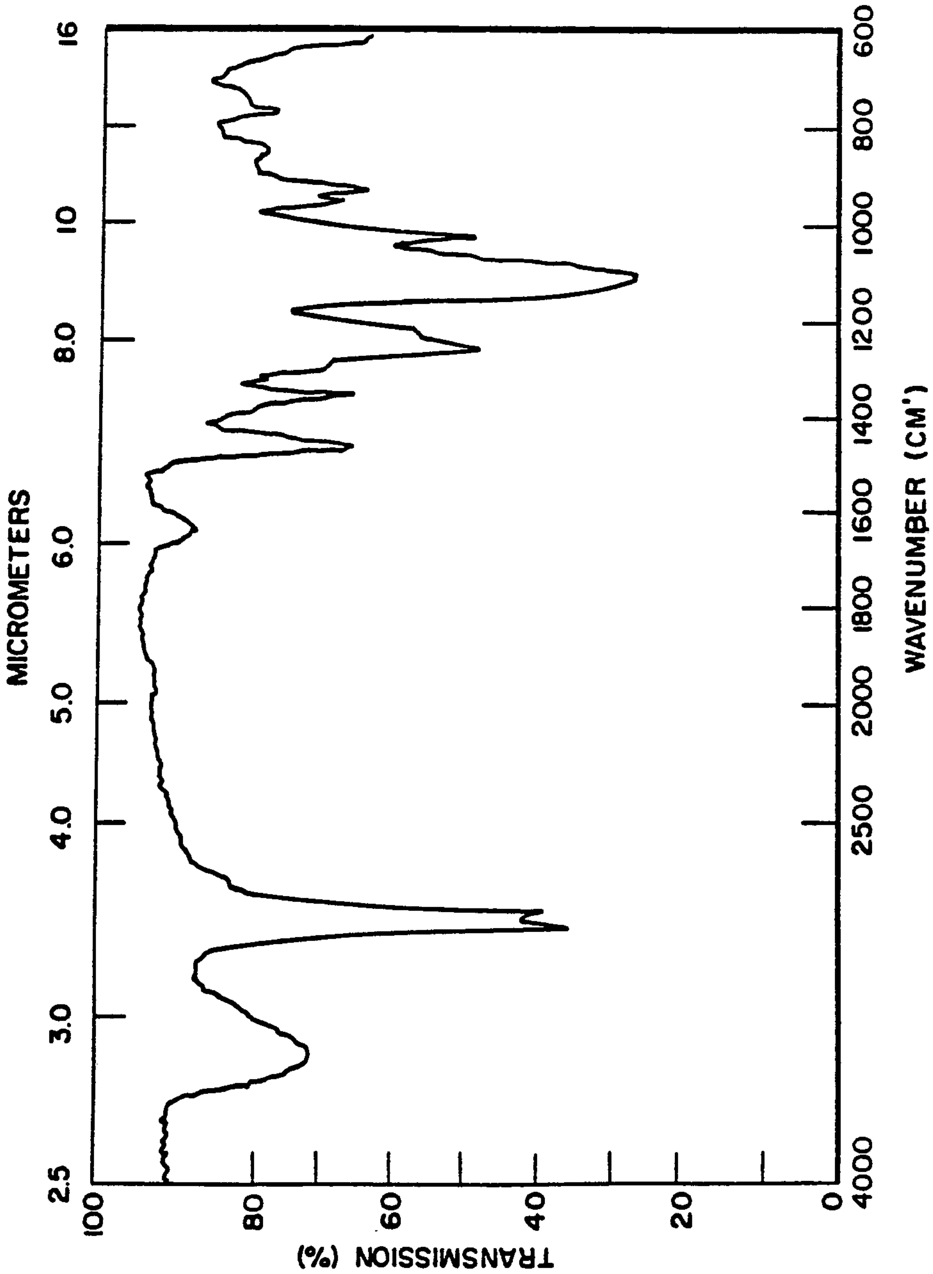
MICROMETERS
2.5
3.0
4.0
5.0
6.0
8.0
10
16
TRANSMISSION (%)
100
80
60
40
20
0
WAVENUMBER (CM')
4000
2500
2000
1800
1600
1400
1200
1000
800
600

FIG. 3